# EUROPEAN PATENT SPECIFICATION

(11) **EP 1 131 556 B1**
(45) Date of publication and mention of the grant of the patent: **25.01.2012**
(21) Application number: 98951113.4
(22) Date of filing: 21.10.1998
(51) Int. Cl.: F03B 13/10, F03B 13/08

(54) **METHOD OF USING A HYDRAULIC TURBINE ASSEMBLY**
VERFAHREN ZUM BETRIEB EINER WASSERTURBINE
METHODE D'UTILISATION D'UN ENSEMBLE DE TURBINE HYDRAULIQUE

(43) Date of publication of application: 12.09.2001
(73) Proprietor: Kouris, Paul S., Kalorama, VIC 3766 (AU)
(72) Inventor: Kouris, Paul S., Kalorama, VIC 3766 (AU)
(74) Representative: Marshall, Caroline
(86) International application number: PCT/AU1998/000877
(87) International publication number: WO 2000/023708

(56) References cited:
- EP-A1- 0 545 885
- FR-A- 2 839 121
- US-A- 2 801 069
- US-A- 4 102 599
- US-A- 4 289 971
- US-A- 4 437 017
- PATENT ABSTRACTS OF JAPAN vol. 0080, no. 26 (M-273), 3 February 1984 (1984-02-03) & JP 58 183869 A (HITACHI ZOSEN KK), 27 October 1983 (1983-10-27)

## Description

### DESCRIPTION OF THE PRIOR ART

The use of hydraulic turbines is known in the prior art. More specifically, hydraulic turbines heretofore devised and utilised are known to consist basically of familiar, expected and obvious structural configurations, notwithstanding the myriad of designs encompassed by the crowded prior art which have been developed for the fulfilment of countless objectives and requirements.

Known prior art hydraulic turbines include U.S. Patent 4,437,017; U.S. Patent 4,963,780; U.S. Patent 4,219,303: U.S. Patent 4,816,697; U.S. Patent 4,443,707 and U.S. Patent 4,284,899.

The hydraulic turbine of US-A-4 437 017 and, additionally, each of US-A- 2 801 069, US-A-4 102 599 and US-A-4 289 971 areable only to extract energy from water flowing linearly these through, and so are unable to take advantage of additional energy available via the Coriolis effect.

While these devices fulfil their respective, particular objectives and requirements, the aforementioned patents do not disclose a new hydraulic turbine assembly. The inventive device includes a water inlet pipe (which is preferably vertical) being extended into the water reservoir of a dam to deliver water to the conventional hydroelectric generation system. The water inlet pipe has a water inlet point being positioned in the water reservoir to create a free vortex formation. An outer housing tube having an inlet cone for collecting water from said inlet free vortex formation and an outlet draft in fluid communication with the water inlet pipe is provided to permit water to pass through the outer housing tube to the water inlet pipe. A rotor and turbine, assembly having a rotor unit and at least one generator unit for creating electrical energy is disposed within the outer housing tube to permit rotation of the rotor unit within the outer housing unit by water passing through the outer housing tube. Each of the generator units is operationally coupled to the rotor unit so that the rotational energy of the rotor unit is transferred by the generator units into electrical energy.

In these respects, the hydraulic turbine assembly according to the present invention substantially departs from the conventional concepts and designs of the prior art, and in so doing provides an apparatus primarily developed for the purpose of deriving extra energy out of a conventional hydroelectric power generating system.

### SUMMARY OF INVENTION

According to an aspect of the invention, there is provided a method of generating electrical energy including the steps of:
providing a power generating system comprising a body of water retained in a reservoir such as to create potential energy In the body of water, the body including at a level below the surface of the body of water a hydraulic turbine assembly,
locating said hydraulic turbine assembly in said water reservoir in such a way that a free vortex formation is created within said water reservoir as a result of water flowing vertically into and through the hydraulic turbine assembly,
   said hydraulic turbine assembly including: a water inlet point positioned in such a way under the free surface of the water in said water reservoir as to create a free vortex formation within said water reservoir, an outer housing tube having an Inlet cone that receives water from said free vortex formation and is designed to allow the water to flow vertically through the outer housing tube,
rotating a rotor unit of the hydraulic turbine assembly as a consequence of the free vortex flow of water vertically through the hydraulic turbine assembly,
   said rotor unit being rotatably mounted within said outer housing tube and rotating within said outer housing tube in response to water flowing in the free vortex through said outer housing tube, and
generating electrical energy in a generator unit of the hydraulic turbine assembly that is coupled to said rotor unit and responsive to rotation of said rotor unit.

### BRIEF DESCRIPTION OF THE DRAWINGS

The invention will be better understood and objects other than those set forth above will become apparent when consideration is given to the following detailed description thereof. Such description makes reference to the annexed drawings wherein:
Figure 1 is a right side view of a new hydraulic turbine assembly according to the present invention.
Figure 2 is a side view of the hydraulic turbine unit.
Figure 3 is an exploded isometric illustration of the hydraulic turbine assembly main section.
Figure 4 is a side view of the rotor & turbine assembly.
Figure 5 is an exploded isometric illustration of the turbine assembly.
Figure 6 is an exploded isometric illustration of the rotor and generator sub assembly.
Figure 7 is a top plan view of the rotor unit.
Figure 8 is a side view of the rotor unit taken along the line 8-8 of Figure 7.
Figure 9 is a side view of the rotor unit taken along the line 9-9 of Figure 7.

### DESCRIPTION OF THE PREFERRED EMBODIMENT

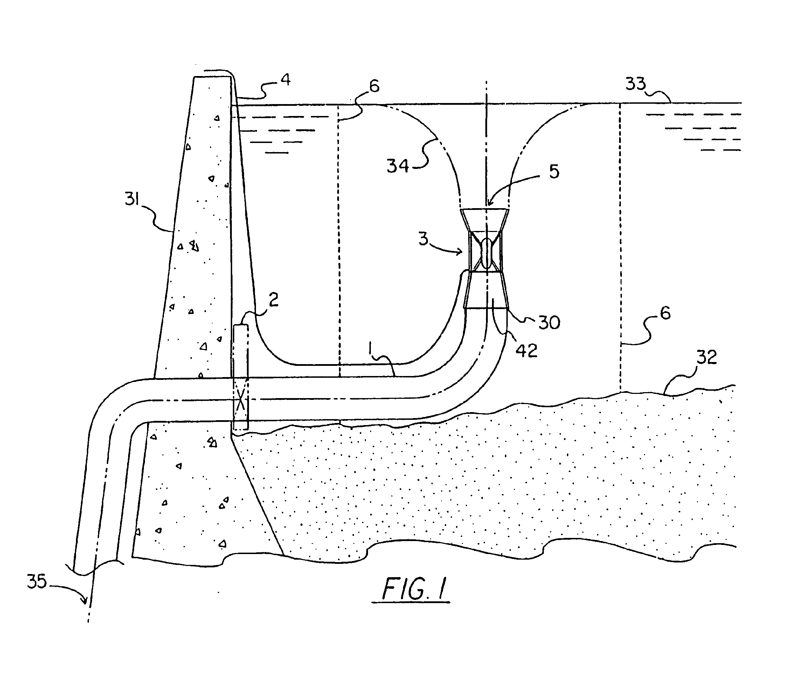

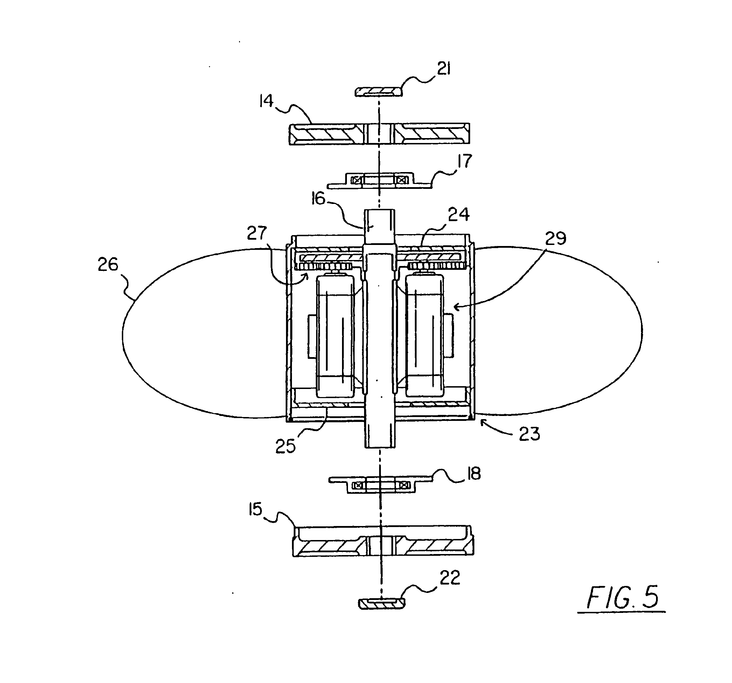

With reference now to the drawings, and in particular to Figures 1 through 9 thereof, a new hydraulic turbine assembly embodying the principles and concepts of the present invention and generally designated by the reference numeral 3 will be described.

More specifically, it will be noted that the hydraulic turbine assembly (3) comprises a vertical water inlet pipe (1), an outlet draft tube (8), and a rotor and turbine assembly (38).

As best illustrated in Figures 1 through 9, it can be shown that this hydraulic turbine assembly (3) is designed to derive extra energy out of a conventional hydroelectric power generation system by incorporating a second turbine generator at the vertical inlet from the reservoir.

The invention as shown in Figure 1 consists of a modular designed removable electrical generation turbine unit attached to a vertically facing inlet water feed pipe (1) that supplies water to the conventional down stream or lower electrical generation power plant.

As shown in Figure 1, the vertical inlet pipe (1) presents itself with a flange receiving end (42) suitable for the attachment of a flange mount (30) of the hydraulic turbine unit (3) and may be fabricated from concrete, steel or other suitable materials in order to withstand the weight and torsional loading subjected by the unit.

The horizontal positioning of the vertical inlet pipe (1) within the water reservoir (41) should allow for adequate clearance from retaining or dam wall (31), base (32), water surface (33) and sides of the water reservoir (41) so as to enable the proper formation of a free inlet vortex (34) specific to the application. The water supply or flow can be slowed or stopped using a suitable form of valve or shut off gate (2) necessary for system shut down.

The flange mount (30) of the hydraulic turbine assembly (3) itself is flange mounted to the flange receiving end (42) of the water inlet pipe (1) and so can be easily disassembled and removed for repairs, maintenance or to enable the conventional hydroelectric generating system (35) to operate as previously.

A power output cable (4) is appropriately insulated and exits from a hermetically sealed generator unit (29) to the required supply feed point outside the water reservoir (41).

The height of the water inlet point (5) of the unit from the free surface of the water (33) is such as to allow for the formation of the free vortex (34) above the hydraulic turbine assembly (3) and depends on the particular application. A screened enclosure structure such as a mesh screen (6) may be required depending on the application for the prevention of material other than water from entering the system.

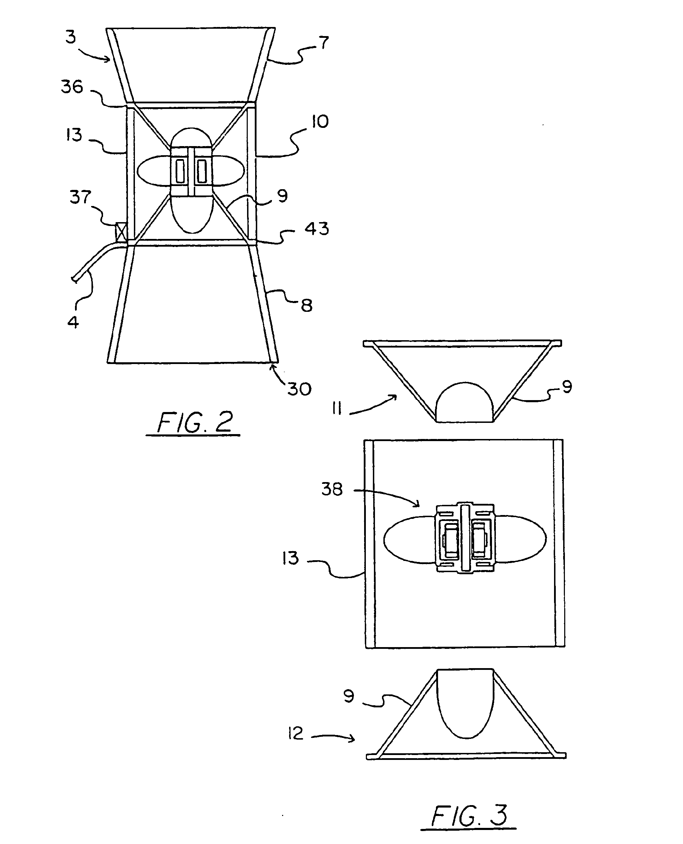

As depicted in Figure 2, the hydraulic turbine assembly (3) comprises three sections the first of which is described as the inlet cone (7). Its function is to collect the inlet water and is shaped to minimise inlet hydraulic pressure losses according to the particular application as well as to locally increase water velocity entering a turbine main section (10). The inlet cone (7) can be made from concrete or steel or other suitable materials according to the specific application and must withstand the high water velocities in its proximity and also the weight of the whole of the unit for unit installation and disassembly. The inlet cone (7) is flange mounted at a flanged joint (36) to the main section (10) and can be disassembled from it.

The third section of the hydraulic turbine assembly shown in Figure 2 is an outlet draft tube (8) which diverges in shape and is shaped generally so as to reduce turbine exit water velocity and to further increase the energy potential across the turbine. Its construction is similar to that of the inlet cone (7). The outlet draft tube (8) is also flange mounted to the main section (10) at a flanged joint (43) and can also be disassembled from it.

The power outlet cable (4) exits the hydraulic turbine assembly (3) via one turbine support pillar (9) and may either pass through a hollow support pillar (9) from the hydraulic turbine assembly (3) or be attached along it. The exit point may also be a hermetically sealed junction box (37) where disconnection is possible separating the cable (4) from the rest of the unit.

The hydraulic turbine assembly (3) main section (10) completes the three part structure of the hydraulic turbine assembly (3) and is the working section containing the turbine rotor and electrical power generating equipment. Its outer housing tube (13) is made from similar materials to the inlet cone (7) and outlet draft (8) and mounts to each respectively at its inlet and outlet flanged joints (36, 43) mount to each respectively.

Continuing the modularity of the concept when separated from the inlet cone (7) and outlet draft (8), the main section (10) as shown in Figure 3 can be further disassembled to reveal a top cap assembly (11) flange mounted between the main section (10) and inlet cone (7) containing the top support pillars (9) that help suspend the rotor and turbine assembly (38) in the middle of the water stream as well as the streamlined top cap (11). The purpose of the top cap assembly (11) is to minimise the hydraulic form losses of the rotor and turbine assembly (38) and does not rotate with the rotor unit (26).

The support pillars (9) are also hydrodynamically designed to minimise form drag and also do not rotate. Similarly, the lower cap assembly (12) is a structure that does not rotate but serves to support the rotor and turbine assembly (38) whilst minimising drag. A flanged outer housing tube (13) completes the support structure for the rotor and turbine assembly (38) as well as of course containing the water.

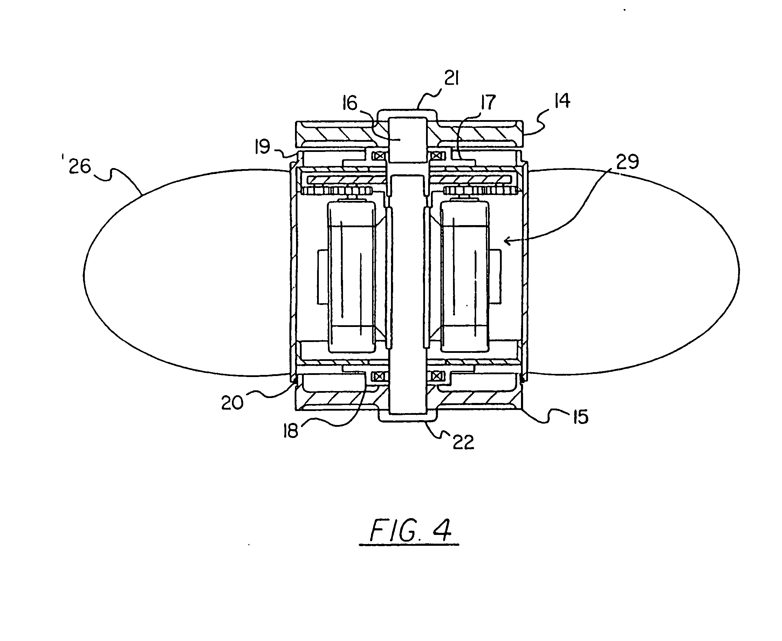

As shown in Figure 4, the rotor and turbine assembly (38) is supported by an upper support plate (14) and a lower support plate (15) which do not rotate but serve to attach the contained unit to the top cap assembly (11) and bottom cap assembly (12) mentioned above.

The support plates (14, 15) also fix a support shaft (16) which also does not rotate thereby minimising the actual number of components and hence weight of the parts that do rotate in the unit and mentioned later on. The actual method of fixing can be splining or keying or other suitable method to prevent the shaft (16) from rotating with respect to the fixed support plates (14, 15). The fixed support shaft (16) also carries an upper bearing assembly (17) and a lower bearing assembly (18) about which revolves the rotor (26).

The rotor unit assembly (26) may need to be sealed against water entry and for this, felt or any suitable seals may be used for an upper seal (19) and a lower seal (20) Upper retaining cap (21) and lower retaining cap (22) also serve to complete the sealing and to vertically locate the fixed support shaft (16). The rotor and generator sub-assembly (23) can be seen separated here from the upper and lower bearing assemblies (17, 18) and upper and lower support plates (14, 15).

An upper bearing plate (24) and a lower bearing plate (25) are attached and rotate with the rotor (26). Their function is to support the rotor (26) in the first instance but also, in the case of the upper bearing plate (24), to transfer the rotational energy of the rotor (26) to the electrical generator unit (29) via a series of gears. The upper bearing plate (24) is itself an annular gear with internal teeth that act on a gear box (27).

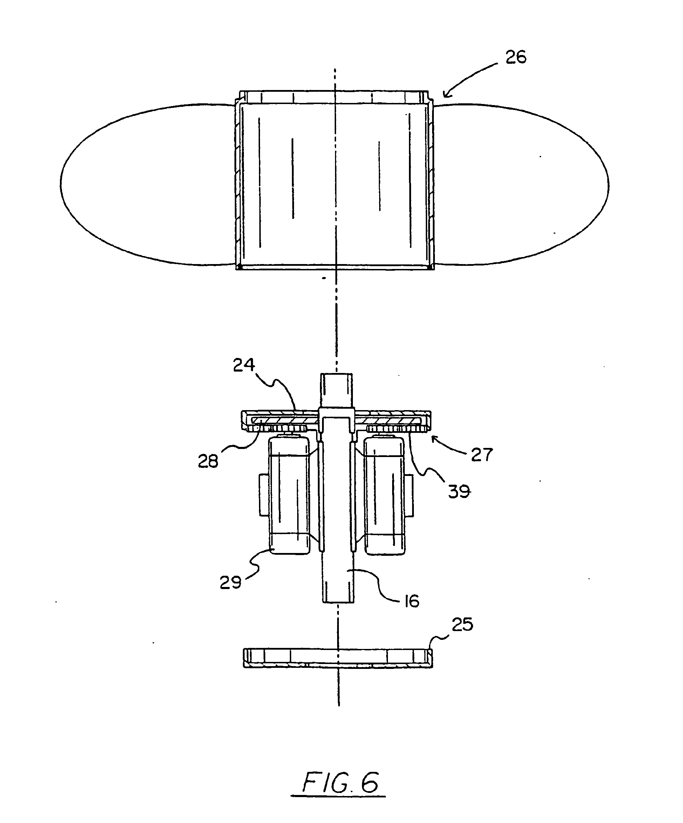

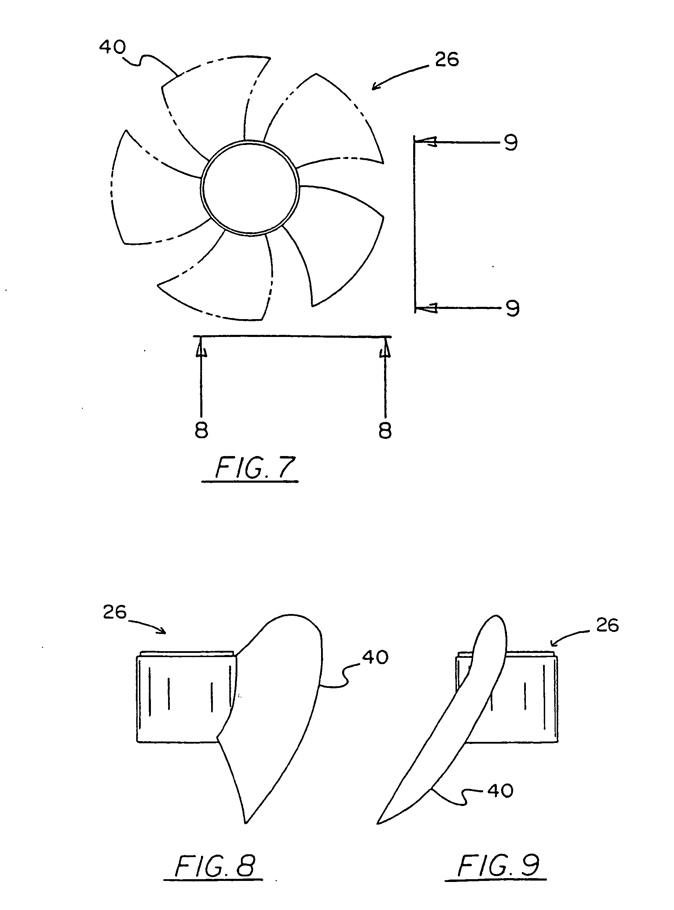

As depicted in Figures 6 and 7, the rotor unit (26) is the main rotating element of the turbine containing three to six blades (40) depending on the application. These blades (40) are pitched at a greater angle at the tip and shallower at the hub to accommodate for differences in relative speeds between the blades (40) and the water for varying distance from the central axis of the rotor unit (26).

A gear box assembly (27) accepts the rotational energy from the upper bearing plate (24) and transforms the torque and speed to suitable values depending on the application feeding it to the generator units (29). The number of sets of gears (39) used depends on the number of modular generator units (29) deployed in the application. A gear carrier (28) that does not rotate and is fixed by keying or other suitable method to the central fixed support shaft (16) is used to maintain the gear box gears (39) in their relative positions and prevent them from revolving around with the upper bearing plate (24). The shape of the gear carrier (28) depends on the number of modular generator units (29) deployed in the application.

The mechanical rotational energy is finally converted to electrical energy by the use of generator units (29) that are firmly attached to flat sections of the fixed support shaft (16) and do not themselves move. The number of generator units (29) deployed depends on the particular application, the annular space considerations and the available torque generated. Each generator unit (29) is fully sealed and submersible, the output cable (4) being also fully sealed.

In use, the inlet of the hydraulic turbine assembly (3) is designed to allow a free vortex to form, the energy of which is currently lost in the form of other turbulence. The source of this energy is a combination of various parameters including initial pre-swirl in the water, the Coriolis effect from the rotation of the Earth and the shape of the water reservoir (41). The low operating head, large flow rate and significant water swirl thus lends itself to the use of an axial flow type of hydraulic turbine as in the present hydraulic turbine assembly (3).

In use, it should also be understood that this hydraulic turbine assembly (3) may be used separately from the conventional hydroelectric generating system (35) of the dam (31) as a stand alone hydroelectric generating system. That is, the hydraulic turbine assembly (3) may be used so that water passing from the hydraulic turbine assembly (3) does not have to enter the conventional hydroelectric generation system (35) of the dam or it may be used in a system that does not include the conventional hydroelectric generating system (35).

Because of the low operating hydraulic head across this hydraulic turbine assembly (3), the majority of the energy to the conventional turbine arrangement for the dam would still be available. Thus, the total energy output of the system with the added hydraulic turbine assembly (3) would then be greater than that using only the conventional turbine arrangement.

One of the greatest strengths of the hydraulic turbine assembly (3) is that by drawing upon the Coriolis effect this invention does not thereby interfere with the operation of the conventional hydraulic turbine system of the dam (31). Accordingly, this invention does not contravene the conservation of energy principle.

As to a further discussion of the manner of usage and operation of the present invention, the same should be apparent from the above description. Accordingly. no further discussion relating to the manner of usage and operation will be provided.

With respect to the above description then, it is to be realised that the foregoing is considered as illustrative only of the principles of the invention. Further, since numerous modifications and changes will readily occur to those skilled in the art, it is not desired to limit the invention to the exact construction and operation shown and described, and accordingly, all suitable modifications may be resorted to, if falling within the scope of the invention as claimed below.

## Claims

1. A method of generating electrical energy including the steps of:
providing a power generating system comprising a body of water retained in a reservoir such as to create potential energy in the body of water, the body including at a level below the surface of the body of water a hydraulic turbine assembly,
locating said hydraulic turbine assembly (3) in said water reservoir In such a way that a free vortex formation (34) is created within said water reservoir as a result of water flowing vertically into and through the hydraulic turbine assembly (3),
said hydraulic turbine assembly (3) including: a water inlet point (5) positioned in such a way under the free surface of the water in said water reservoir as to create a free vortex formation (34) within said water reservoir, an outer housing tube (13) having an inlet cone (7) that receives water from said free vortex formation (34) and is designed to allow the water to flow vertically through the outer housing tube (13),
rotating a rotor unit (26) of the hydraulic turbine assembly (3) as a consequence of the free vortex flow of water vertically through the hydraulic turbine assembly (3),
said rotor unit (26) being rotatably mounted within said outer housing tube (13) and rotating within said outer housing tube (13) in response to water flowing in the free vortex through said outer housing tube (13), and
generating electrical energy in a generator unit (29) of the hydraulic turbine assembly (3) that is coupled to said rotor unit (26) and responsive to rotation of said rotor unit (26).

## Patentansprüche

1. Verfahren zur Erzeugung elektrischer Energie mit folgenden Verfahrensschritten:
Bereitstellung eines leistungserzeugenden Systems mit einem Wasserkörper, welcher in einem Behälter bevorratet ist, um potentielle Energie in dem Wasserkörper zu erzeugen, wobei der Wasserkörper bei einem Niveau unterhalb der Oberfläche des Wasserkörpers eine hydraulische Turbinenbaugruppe besitzt,
Anordnen der hydraulischen Turbinenbaugruppe (3) in dem Behälter für das Wasser derart, dass infolge von vertikal in und durch die hydraulische Turbinenbaugruppe (3) fließenden Wassers ein freier Wasserstrudel oder freie Wasserwirbel (34) in dem Behälter für das Wasser erzeugt wird/werden,
wobei die hydraulische Turbinenbaugruppe (3) aufweist: einen Einlasspunkt (5) für Wasser, der derart unter der freien Oberfläche des Wassers in dem Behälter für das Wasser angeordnet ist, dass ein freier Wasserstrudel oder freie Wasserwirbel (34) in dem Behälter für das Wasser erzeugt wird/werden, ein äußeres Gehäuserohr oder aufnehmendes Rohr (13) mit einem Einlasskegel oder -trichter (7), der Wasser von dem freien Wasserstrudel oder den Wasserwirbeln (34) empfängt und geeignet gestaltet ist zur Ermöglichung, dass Wasser vertikal durch das äußere Gehäuserohr oder durch das aufnehmende Rohr (13) fließt,
Verdrehen einer Rotoreinheit (26) der hydraulischen Turbinenbaugruppe (3) infolge des freien Flusses des Wasserstrudels oder Wasserwirbels vertikal durch die hydraulische Turbinenbaugruppe (3),
wobei die Rotoreinheit (26) verdrehbar in dem äußeren aufnehmenden Rohr oder Gehäuserohr (13) montiert ist und infolge des Wassers, welches in dem freien Wirbel oder Strudel durch das äußere aufnehmende Rohr oder Gehäuserohr (13) fließt, in dem äußeren aufnehmenden Rohr oder Gehäuserohr (13) rotiert, und
Erzeugen elektrischer Energie in einer Generatoreinheit (29) der hydraulischen Turbinenbaugruppe (3), welche mit der Rotoreinheit (26) gekoppelt ist, wobei dies infolge der Rotation der Rotoreinheit (26) erfolgt.

## Revendications

1. Procédé de génération d'énergie électrique comprenant les étapes consistant à :
fournir un système générateur d'électricité comprenant une masse d'eau retenue dans un réservoir de façon à créer de l'énergie potentielle dans la masse d'eau, la masse incluant à un niveau en dessous de la surface de la masse d'eau un ensemble de turbine hydraulique,
positionner ledit ensemble de turbine hydraulique (3) dans ledit réservoir d'eau de façon à ce qu'une formation de vortex libre (34) soit créée à l'intérieur dudit réservoir d'eau comme résultant de la circulation verticale de l'eau dans et à travers l'ensemble de turbine hydraulique (3),
ledit ensemble de turbine hydraulique (3) comprenant : un point d'entrée d'eau (5) positionné sous la surface libre de l'eau dans ledit réservoir d'eau de façon à créer une formation de vortex libre (34) à l'intérieur dudit réservoir d'eau, un tube de logement extérieur (13) ayant un cône d'entrée (7) qui reçoit de l'eau de ladite formation de vortex libre (34) et est conçu pour permettre à l'eau de circuler verticalement à travers le tube de logement extérieur (13),
faire tourner une unité de rotor (26) de l'ensemble de turbine hydraulique (3) comme conséquence de l'écoulement de vortex libre d'eau vertical à travers l'ensemble de turbine hydraulique (3),
ladite unité de rotor (26) étant montée de façon rotative à l'intérieur dudit tube de logement extérieur (13) et tournant à l'intérieur dudit tube de logement extérieur (13) en réponse à l'écoulement de l'eau dans le vortex libre à travers ledit tube de logement extérieur (13), et
générer de l'énergie électrique dans une unité de générateur (29) de l'ensemble de turbine hydraulique (3) qui est couplé à ladite unité de rotor (26) et répond à la rotation de ladite unité de rotor(26).
